# EUROPÄISCHE PATENTSCHRIFT

(11) **EP 2 125 833 B1**
(45) Veröffentlichungstag und Bekanntmachung des Hinweises auf die Patenterteilung: **25.08.2010**
(21) Anmeldenummer: 08701285.2
(22) Anmeldetag: 08.01.2008
(51) Int. Cl.: C07F 7/08, C08G 77/00

(54) **VERFAHREN ZUR HERSTELLUNG POLYMERISIERBARER SILICONE**
METHOD FOR THE PRODUCTION OF POLYMERISABLE SILICONES
PROCÉDÉ DE PRÉPARATION DE SILICONES POLYMÉRISABLES

(30) Priorität: 24.01.2007 DE 102007003578
(43) Veröffentlichungstag der Anmeldung: 02.12.2009
(73) Patentinhaber: Wacker Chemie AG, 81737 München (DE)
(72) Erfinder: JANDKE, Markus, 84508 Burgkirchen (DE); KOOPMANN, Florian, 84489 Burghausen (DE); PESCHANEL, Birgit, 84489 Burghausen (DE)
(74) Vertreter: Deffner-Lehner, Maria
(86) Internationale Anmeldenummer: PCT/EP2008/050109
(87) Internationale Veröffentlichungsnummer: WO 2008/090012

(56) Entgegenhaltungen:
- EP-A- 1 510 520
- EP-B1- 1 472 264
- JP-A- 11 217 389

## Beschreibung

Die Erfindung betrifft die Herstellung von polymerisierbaren Siliconen enthaltend siloxysubstituierte Silanstrukturen. Insbesondere betrifft die Erfindung die Herstellung von polymerisierbaren Gruppen aufweisenden, mit Triorganosiloxygruppen substituierten Silanen hoher Reinheit durch Substitution von Alkoxysilanen mit Disiloxanen.

Polymerisierbare Silicone, wie 3-Acryloxypropyltris(trimethylsiloxy)silan, 3-Methacryloxypropyltris(trimethylsiloxy)silan, 3-Methacryloxypropyltris(dimethylphenylsiloxy)silan, 1-Methacryloxymethyltris(trimethylsiloxy)silan, etc. sind nützlich als Rohstoff bzw. Monomer für die Herstellung elektronischer Materialien, zur Herstellung von Kontaktlinsen, als Rohstoff in Zusammensetzungen für funktionale und industrielle Beschichtungen, polymere Mikrostrukturen oder Kosmetikanwendungen.

Die Anwendung polymerisierbarer Silicone als Rohstoff bzw. Monomer für die Herstellung elektronischer Materialien, zur Herstellung von Kontaktlinsen und optischen Bauteilen, als Rohstoff in Zusammensetzungen für funktionale und industrielle Beschichtungen, für polymere Mikrostrukturen oder Kosmetikanwendungen erfordert die Bereitstellung hochreiner Materialien mit einem reduzierten Gehalt an Nebenprodukten wie Monohydroxysilanen, Monoorganoxysilanen und difunktionellen Disiloxanen sowie anorganischen und metallischen Verunreinigungen.

In JP 11-217389 wird ein Verfahren beschrieben, indem ein Alkoxy- oder Aryloxy-substituiertes Silicon (z. B. 3-Methacryloxypropyl-trimethoxysilan) mit Hexamethyldisiloxan in Gegenwart einer Carbonsäure (z. B. Essigsäure) und eines sauren Katalysators (Trifluormethansulfonsäure) umgesetzt wird, wobei ein Siloxy-substitutiertes Produkt erhalten wird. Das Verfahren ist vorzugsweise so konzipiert, dass Hexamethyldisiloxan, Carbonsäure und Katalysator vorgelegt werden, bevor die Alkoxy- oder Aryloxykomponente zugesetzt und die Reaktion bei ca. 20-70°C durchgeführt wird. Durch die Zugabe einer kleinen Menge an Hexamethyldisilazan (0,0025 mol pro mol Alkoxysilan) wird die Reaktion gestoppt und neutralisiert, wobei ein Produkt mit einer reduzierten Reinheit (< 90 Fl.%) erhalten wird.
Das Verhältnis von Produkt G-Si(OSiMe₃)₃ [G=Methacryloxypropyl-] zum Monoorganoxy-Nebenprodukt G-Si(OMe)(OSiMe₃)₂ beträgt ca. 8,3 (d.h. ca. 10,7% Monoorganoxynebenprodukt),
das Verhältnis von Produkt zum difunktionellen Nebenprodukt G-[Me₃SiO]₂Si-O-Si[OSiMe₃]₂-G beträgt 54,9 (d.h. ca. 1,8 % difunktionelles Disiloxan). Es wird beschrieben, wie durch entsprechende Temperaturführung die Kondensation vorhandener Silanolgruppen zu difunktionalem Disiloxan unterdrückt wird, allerdings nicht wie der Gehalt an Monohydroxysilan (Silanol) limitiert werden kann. Der hohe Gehalt an Verunreinigungen ist problematisch hinsichtlich der oben genannten Anwendungen.

Aus JP 2000-186095 ist bekannt, Hexamethyldisiloxan, eine Carbonsäure (Essigsäure) und eine starke Säure (konzentrierte Schwefelsäure) umzusetzen mit 3-Methacryloxypropyltrimethoxysilan, wobei letzteres bevorzugt bei einer Temperatur von -10°C bis 0°C innerhalb 30 min zugegeben wird. Nach der Nachreaktion, Waschen mit Wasser und Destillation wird 3-Methacryloxypropyltris(trimethylsiloxysilan) erhalten mit einer Reinheit von 90,2-97,8%. Das Produkt ist verunreinigt mit Monohydroxy-Nebenprodukt und Dimer-Nebenprodukt (difunktionelles Disiloxan). Neben dem hohen Gehalt der genannten Verunreinigungen (insbes. difunktionelles Disiloxan) besteht ein wesentlicher Nachteil des Verfahrens darin, dass nach der eigentlichen Reaktion ein langwieriges und daher unwirtschaftliches Altern der Reaktionsmischung bei verschiedenen Temperaturen über einen Zeitraum von 24 h in Kauf genommen werden muss. Der Alterungsprozess ist ein wesentlicher Bestandteil des Verfahrens, da es während der Reaktion zur Bildung von Monohydroxynebenprodukten kommt, deren Gehalt im Zuge des Alterungsprozesses dadurch reduziert wird, dass die Silanole über eine Dehydratisierung in difunktionelles Disiloxan umgewandelt werden. In diesem Zusammenhang werden Gehalte an difunktionellem Disiloxan bis 10% erhalten, was für eine Reihe von Anwendungen nicht akzeptabel ist.

EP 1510520 A beschreibt die Herstellung von hochreinen verzweigten Siloxanen mit reduziertem Gehalt an Monoorganoxysilan bzw. Monohydroxysilanverunreinigungen in einem zweistufigen Prozess durch Nachreaktion eines verunreinigten Rohprodukts (nach vollständiger oder nach partieller Aufarbeitung bzw. Isolierung) mit Disiloxan und Säure in hoher Ausbeute. Allerdings hat das genannte Verfahren den Nachteil, dass zum einen aufgrund der wässrigen Aufarbeitung sich im sauren Milieu Monohydroxysilan- bzw. Monoorganoxy verunreinigungen auch noch weiterhin bilden können. Durch die Nachbehandlung kann der Gehalt an Monoorganoxysilan- bzw. Monohydroxysilanverunreinigung zwar gesenkt werden. Zum anderen besteht der wesentliche Nachteil des Verfahrens darin, dass vor der Nachreaktion das Rohprodukt vollständig oder zumindest teilweise aufgearbeitet werden muss und dass damit die Waschungen, Phasentrennungen (und ggf. auch Destillationen) zweifach durchzuführen sind.

EP 1472264 A beschreibt ein Verfahren zur Herstellung von hochreinen Siliconverbindungen über die Substitution von Alkoxy-, Aryloxy- oder Acyloxy-Gruppen durch Trialkylsiloxyeinheiten. In Gegenwart einer Carbonsäure (Essigsäure), eines sauren Katalysators (CF₃SO₃H), eines Disiloxans (Me₃SiOSiMe₃) wird die Reaktion durch Zugabe eines Alkoxy- oder Aryloxysilans gestartet.
Danach wird ein Carbonsäureanhydrid (z.B. Acetanhydrid) zugegeben. Das Reaktionssystem bleibt weitestgehend einphasig, was die Menge der zur Neutralisation einzusetzenden Base erhöht.

Beispielsweise wird 3-Methacryloxypropyltris(trimethylsiloxysilan) in hoher Ausbeute mit einer Reinheit von 98,7% erhalten, wobei als Verunreinigungen 1,3% Disiloxan (Dimer) sowie weniger als 0,5% des Monoorganoxysilan-Nebenprodukts CH₂=CH(CH₃)COO-(CH₂)₃-Si(OMe)(OSiMe₃)₃ erhalten werden. Für weitere Produkte werden deutlich geringere Reinheiten (bis 93%) und höhere Gehalte an dimeren Verbindungen gemessen (bis 4,4%).

Es ist allerdings nicht beschrieben, wie der Gehalt an Monohydroxysilan-Nebenprodukt bis zur Isolierung des Produktes niedrig gehalten werden kann und wie dessen Bildung im Zuge der Aufarbeitung/Neutralisation verhindert werden kann.

Neben der hohen benötigten Menge an Carbonsäureanhydrid liegt der wesentliche Nachteil des genannten Verfahrens darin, dass der Gehalt an difunktionellen Verunreinigungen (Disiloxan) weiterhin über 1 % liegt und bei Verzicht auf eine Destillation noch anorganische und polymere organische Verunreinigungen enthalten sein sollten. Im Falle einer Destillation wäre mit einer signifikant niedrigeren Ausbeute zu rechnen. Insbesondere zur Herstellung elektronischer und optischer Materialien und Bauteile, zur Herstellung von Kontaktlinsen sowie für die Anwendung in funktionellen Beschichtungen ist ein deutlich kleinerer Gehalt an difunktionellen Verunreinigungen erforderlich. In diesen Anwendungen stört insbesondere der Gehalt an difunktionellen Siliconen im polymerisierbaren Silicon, da dieser über eine Steigerung der Vernetzungsdichte eine Modifikation der mechanischen und damit auch der optischen Eigenschaften bzw. der gewünschten Eigenschaften für die Anwendung im Bereich elektronischer Materialien oder funktionaler Beschichtungen auslöst. Restgehalte an Monohydroxy- bzw. Monomethoxy-verunreinigungen können in diesen Anwendungen durch Abspaltungsreaktion bzw. Kondensationsreaktionen zur nachträglichen Veränderung der funktionalen Eigenschaften der Materialien, Bauteile oder Beschichtungen führen. Restgehalte an anorganischen Salzen oder polymere Anteile können zu ungewünschter Lichtstreuung und ungenügender Performance optischer Bauteile führen. In elektronischen Materialien ist in diesem Fall eine signifikante Änderung der Isolationswirkung/Leitfähigkeit und der Durchschlagsfeldstärke zu erwarten. Oberflächeneigenschaften von funktionalen Beschichtungen können durch die genannten Verunreinigungen nachhaltig negativ beeinflusst werden. Es ist daher wesentlich, dass polymerisierbare Silicone in hochreiner Form mit einem minimalen Gehalt an difunktionellen Siliconen, noch-kondensationsreaktiven Siliconen sowie anorganischen Verunreingungen zur Verfügung gestellt werden.

Es bestand die Aufgabe, ein Verfahren zur Herstellung polymerisierbarer Silicone hoher Reinheit bereitzustellen, bei dem die oben beschriebenen Nachteile vermieden werden, und bei dem polymerisierbare Silicone hoher Reinheit mit einem Gehalt von mindestens 98,5% erhalten werden, die als Nebenprodukte einen Gehalt von weniger als 0,4% an difunktionellem Disiloxan sowie von weniger als jeweils 0,4% an Monohydroxy- bzw. Monoalkoxystrukturen aufweisen. Die Aufgabe wird durch die Erfindung gelöst.

Gegenstand der Erfindung ist ein Verfahren zur Herstellung hochreiner polymerisierbarer Silicone der Formel

P-Y-Sp-Si(R²)ₙ(OSiR¹₃)₍₃₋ₙ₎ (I)

indem
(a) Disiloxan (1) der Formel

   (R¹)₃SiOSi(R¹)₃ (II)

   in Gegenwart von Essigsäure (2) und saurem Katalysator (3) vorgelegt wird,
(b) bei einer Temperatur von 0° bis 60°C innerhalb von 0,5 h - 3 h ein substituiertes Alkoxysilan (4) der Formel

   P-Y-Sp-Si(R²)ₙ(OR³)₍₃₋ₙ₎ (III)

   zudosiert wird und anschließend innerhalb von 0,5 h bis 3 h bei 0 - 60°C nachreagiert wird,
(c) 0,2 - 1,0 mol Acetylchlorid (5), bezogen auf 1 Mol Alkoxysilan (4), zugesetzt wird,
(d) nach Phasenseparation eine saure Phase (Unterschicht) abgetrennt wird,
(e) 0,02 - 1,0 mol Hexamethyldisilazan (6), bezogen auf 1 Mol Alkoxysilan (4), zugesetzt wird,
(f) nach Abfiltration des entstandenen Salzes die leicht-flüchtigen Bestandteile entfernt werden und das Produkt destilliert wird,
   und gegebenenfalls
(g) das Produkt anschließend filtriert wird,
wobei
- R¹: gleich oder verschieden ist und ein Wasserstoffatom oder einen gegebenenfalls substituierten einwertigen Kohlenwasserstoffrest mit 1 bis 18 Kohlenstoffatomen bedeutet,
- R²: gleich oder verschieden ist und ein Wasserstoffatom oder einen gegebenenfalls substituierten einwertigen Kohlenwasserstoffrest mit 1 bis 18 Kohlenstoffatomen bedeutet,
- R³: gleich oder verschieden ist und einen gegebenenfalls mit Alkoxygruppen substituierten Alkylrest mit 1 bis 18 Kohlenstoffatomen bedeutet,
- Sp: eine Einfachbindung oder einen zweiwertigen Kohlenwasserstoffrest mit 1 bis 8 Kohlenstoffatomen bedeutet,
- Y: eine Einfachbindung oder -O- bedeutet,
- P: einen Acryloxy- Methacryloxy- Vinyl- oder Allylrest bedeutet
- n: 0, 1 oder 2, vorzugsweise 0, ist.

Gegenstand der Erfindung sind weiterhin hochreine polymerisierbare Silicone der Formel

P-Y-Sp-Si(R²)ₙ(OSiR¹₃)₍₃₋ₙ₎ (I)

die eine Reinheit von mindestens 98,5 %, vorzugsweise mindestens 99,0 %,
einen Gehalt von weniger als 0,4 %, vorzugsweise weniger als 0,2 %, an difunktionellem Disiloxan
der Formel

[P-Y-Sp-Si(R²)ₙ(OSiR¹₃)₍₂₋ₙ₎]₂O,

von weniger als 0,4 %, vorzugsweise weniger als 0,3 %, an Monohydroxysilan der Formel

P-Y-Sp-Si(R²)ₙ(OH)(OSiR¹₃)₍₂₋ₙ₎

und weniger als 0,4 %, vorzugsweise weniger als 0,3 %, an Monoalkoxysilan der Formel

P-Y-Sp-Si(R²)ₙ(OR³)(OSiR¹₃)₍₂₋ₙ₎

aufweisen, wobei R¹, R², R³, Sp, Y, P und n die oben dafür angegebene Bedeutung haben.

Beispiele für R¹ sind Alkyl-, Alkenyl-, Alkinyl- und Arylreste mit 1-18 Kohlenstoffatomen, vorzugsweise 1-15 Kohlenstoffatomen, bevorzugt 1-9 Kohlenstoffatomen. Beispiele für R¹ sind Alkylreste, wie der Methyl-, Ethyl-, n-Propyl-, Isopropyl-, n-Butyl-, Isobutyl-, tert.-Butyl-, n-Pentyl-, n-Hexyl-, und n-Octylrest; Cycloalkylreste, wie der Cyclopentyl- und Cyclohexylrest; Alkenyl- und Alkinylreste, wie der Vinyl-, Propenyl-, Allyl- und Ethinylrest; und Arylreste, wie der Phenylrest.

Beispiele für R² sind Alkyl-, Alkenyl-, Alkinyl- und Arylreste mit 1-18 Kohlenstoffatomen, vorzugsweise 1-9 Kohlenstoffatomen, bevorzugt 1-6 Kohlenstoffatomen. Beispiele für R² sind Alkylreste, wie der Methyl-, Ethyl-, n-Propyl-, Isopropyl-, n-Butyl-, Isobutyl-, tert.-Butyl-, n-Pentyl-, n-Hexyl-, und n-Octylrest; Cycloalkylreste, wie der Cyclopentyl- und Cyclohexylrest; Alkenyl- und Alkinylreste, wie der Vinyl-, Propenyl-, Allyl- und Ethinylrest; und Arylreste, wie der Phenylrest.

Beispiele für R³ sind gegebenenfalls mit Alkoxygruppen substituierte Alkylreste mit 1 bis 3 Kohlenstoffatomen. Beispiele für R³ sind der Methyl-, Ethyl- und Propylrest.

Beispiele für Sp sind Alkylen- oder Cycloalkylenreste, wie -CH₂-, -CH₂-CH₂- und -CH₂-CH₂-CH₂- Reste und C₄-C₈-Alkylenreste und Cyclohexylenreste.
Y ist bevorzugt -O-.
P ist bevorzugt ein Acryloxy- und Methacryloxyrest.

Beispiele für Disiloxane der Formel (R¹)₃SiOSi(R¹)₃ sind Hexamethyldisiloxan,
Hexaethyldisiloxan,
1,3-Di-tert-butyl-1,1,3,3-tetramethyldisiloxan,
1,1,3,3-Tetramethyl-disiloxan,
1,3-Divinyl-1,1,3,3-tetramethyldisiloxan und
1,3-Diphenyl-1,1,3,3-tetramethyldisiloxan.

Beispiele für Alkoxysilane sind
1-Acryloxymethyltrimethoxysilan
2-Acryloxyethyltrimethoxysilan
3-Acryloxypropyltrimethoxysilan
1-Methacryloxymethyltrimethoxysilan
1-Methacryloxymethyldimethoxymethylsilan
2-Methacryloxyethyltrimethoxysilan
3-Methacryloxypropyltrimethoxysilan
1-Acryloxymethyltriethoxysilan
2-Acryloxyethyltriethoxysilan
3-Acryloxypropyltriethoxysilan
1-Methacryloxymethyltriethoxysilan
2-Methacryloxyethyltriethoxysilan
3-Methacryloxypropyltriethoxysilan
4-Methacryloxybutyltrimethoxysilan
6-Methacryloxyhexyltrimethoxysilan
8-Methacryloxyoctyltrimethoxysilan
Methacryloxycyclohexyltrimethoxysilan
Vinyltrimethoxysilan.

Die verwendeten Alkoxysilane sind bereits mit einer polymerisierbaren Gruppe substituiert. Um eine Polymerisation der polymerisierbaren Gruppe zu vermeiden, ist es auch möglich Alkoxysilane zu verwenden, die bereits mit einem geringen Gehalt eines Stabilisators versehen sind.

Alternativ kann der Reaktionsmischung ein Stabilisator zugesetzt werden (0-5000 ppm, bevorzugt 0-3000 ppm bezogen auf eingesetztes Alkoxysilan).
Beispiele für Stabilisatoren sind
2,6-Di-tert.-butyl-4-methylphenol(BHT),
2,6-Di-tert.-butyl-4-(dimethylamino-methyl)phenol und Phenothiazin.

Besonders bevorzugte Alkoxysilane sind:
3-Methacryloxypropyltrimethoxysilan
1-Methacryloxymethyltrimethoxysilan
1-Methacryloxymethyldimethoxymethylsilan
Vinyltrimethoxysilan

Beispiele für polymerisierbare Silicone der Formel P-Y-Sp-Si(R²)ₙ(OSiR¹₃)₍₃₋ₙ₎ sind:
1-Acryloxymethyltris(trimethylsiloxy)silan,
2-Acryloxyethyltris(trimethylsiloxy)silan,
3-Acryloxypropyltris(trimethylsiloxy)silan,
1-Methacryloxymethyltris(trimethylsiloxy)silan,
2-Methacryloxyethyltris(trimethylsiloxy)silan,
3-Methacryloxypropyltris(trimethylsiloxy)silan,
4-Methacryloxybutyltris(trimethylsiloxy)silan,
6-Methacryloxyhexyltris(trimethylsiloxy)silan,
8-Methacryloxyoctyltris(trimethylsiloxy)silan,
Methacryloxycyclohexyltris(trimethylsiloxy)silan,
1-Acryloxymethylbis(trimethylsiloxy)methylsilan,
2-Acryloxyethylbis(trimethylsiloxy)methylsilan,
3-Acryloxypropylbis(trimethylsiloxy)methylsilan,
1-Methacryloxymethylbis(trimethylsiloxy)methylsilan,
2-Methacryloxyethylbis(trimethylsiloxy)methylsilan,
3-Methacryloxypropylbis(trimethylsiloxy)methylsilan,
1-Methacryloxymethyltris(dimethylvinylsiloxy)silan, 3-Methacryloxypropyltris(dimethylvinylsiloxy)silan und
Vinyltris(trimethylsiloxy)silan.

Bevorzugte Beispiele für polymerisierbare Verbindungen P-Y-Sp-Si(R²)ₙ(OSiR¹₃)₍₃₋ₙ₎ sind
3-Acryloxypropyltris(trimethylsiloxy)silan,
3-Methacryloxypropyltris(trimethylsiloxy)silan,
3-Methacryloxypropyltris(dimethylphenylsiloxy)silan,
1-Methacryloxymethyltris(trimethylsiloxy)silan

1-Methacryloxymethylbis(trimethylsiloxy)methylsilan und
Vinyltris(trimethylsiloxy)silan.

Beispiele für Monohydroxysilanverunreinigungen P-Y-Sp-Si(R²)ₙ(OH)(OSiR¹₃)₍₂₋ₙ₎ sind
3-Acryloxypropylbis(trimethylsiloxy)silanol,

3-Methacryloxypropylbis(trimethylsiloxy)silanol,
3-Methacryloxypropylbis(dimethylphenylsiloxy)silanol,

1-Methacryloxymethylbis(trimethylsiloxy)silanol
1-Methacryloxymethyl(trimethylsiloxy)methylsilanol und
Vinylbis(trimethylsiloxy)silanol.

Beispiele für Monoorganoxysilanverunreinigungen P-Y-Sp-Si(R²)ₙ(OR³)(OSiR¹₃)₍₂₋ₙ₎ sind
3-Acryloxypropylbis(trimethylsiloxy)methoxysilan,
3-Methacryloxypropylbis(trimethylsiloxy)methoxysilan,
3-Methacryloxypropylbis(dimethylphenylsiloxy)methoxysilan,
1-Methacryloxymethylbis(trimethylsiloxy)methoxysilan

1-Methacryloxymethyl(trimethylsiloxy)methylmethoxysilan und
Vinylbis(trimethylsiloxy)methoxysilan.

Beispiele für Verunreinigungen mit difunktionellen Disiloxanen der Formel [P-Y-Sp-Si(R²)ₙ(OSiR¹₃)₍₂₋ₙ₎]₂O sind
1,3-Bis(3-acryloxypropyl)-1,1,3,3-tetra(trimethylsiloxy)-disiloxan,
1,3-Bis(3-methacryloxypropyl)-1,1,3,3-tetra(trimethylsiloxy)-disiloxan,
1,3-Bis(1-methacryloxymethyl)-1,1,3,3-tetra(trimethylsiloxy)-disiloxan,
1,3-Bis(1-methacryloxypropyl)-1,1,3,3-tetra(dimethylphenylsiloxy)-disiloxan,
1,3-Bis(3-methacryloxypropyl)-1,3,-bis(trimethylsiloxy)-1,3-dimethyldisiloxan und
1,3-Divinyl-1,1,3,3-tetra(trimethylsiloxy)disiloxan.

Das erfindungsgemäße Verfahren wird im Folgenden genauer beschrieben:
(a) In einem ersten Schritt werden Disiloxane (1) der Formel (R¹)₃SiOSi(R¹)₃ in Gegenwart von Essigsäure (2) und saurem Katalysator (3) vorgelegt. Das Molmengenverhältnis von Disiloxan (1) und Alkoxysilan (4) liegt dabei vorzugsweise bei 0,5 bis 1,0 mol, bevorzugt 0,6 bis 0,8 mol, Disiloxan (1) je Mol Alkoxygruppe des Alkoxysilans(4).
   Das Molmengenverhältnis zwischen Essigsäure (2) und Alkoxysilan (4) beträgt dabei vorzugsweise 1,5 bis 6 Mol, bevorzugt 2 bis 4 mol Essigsäure (2) pro Mol Alkoxysilan (4).
   Der saure Katalysator (3) ermöglicht die Reaktion mit dem später zuzugebenden Alkoxysilan (4). Als saure Katalysatoren können beispielsweise konzentrierte Salzsäure, Schwefelsäure, Trifluoressigsäure oder Trifluormethansulfonsäure, aber auch Lewissäuren wie AlCl₃ oder TiCl₃ verwendet werden, sofern sie keine Nebenreaktion mit weiteren Substituenten des Alkoxysilans eingehen. Typischerweise werden 0,001 bis 0,01 mol an saurem Katalysator (3), bezogen auf die Menge an Alkoxysilan eingesetzt. Die Mischung wird vorzugsweise unter Rühren auf eine Temperatur von 0°C bis 60°C aufgeheizt, bevorzugt 20 - 60°C. Höhere Temperaturen begünstigen Nebenreaktionen durch Kondensation der Alkoxysilylgruppierungen unter Bildung von difunktionellem Disiloxan.
(b) Im Verfahrensschritt (b) werden substituierte Alkoxysilane (4) innerhalb eines Zeitfensters von vorzugsweise 0,5 h bis 3 h, bevorzugt 0,5 h bis 2 h, besonders bevorzugt 45 min bis 75 min zudosiert, wobei die Temperatur bei 0°C bis 60°C , bevorzugt zwischen 20 und 60°C gehalten wird. Um eine möglichst vollständige Vorreaktion zu ermöglichen wird bei dieser Temperatur für weitere 30 min bis 3 h, bevorzugt 45 min bis 2 h nachgerührt.
(c) Um den nach der Vorreaktion vorhandenen Nebenproduktgehalt an Monoorganoxysilan zu eliminieren wird bei 0° bis 60°C , bevorzugt bei 20°C bis 60°C Acetylchlorid (5) in einem Zeitraum von vorzugsweise 5 min bis 3 h, bevorzugt 10 min bis 2 h zudosiert. Das Molverhältnis von Acetylchlorid (5) zu Alkoxysilan (4) liegt dabei bei 0,2 bis 1,0 mol, bevorzugt bei 0,3 bis 0,8 mol, bezogen jeweils auf 1 Mol des Alkoxysilans (4).
   Die Funktion des Acetylchlorids besteht darin, im Verlauf der Reaktion entstandenes Wasser und Methanol zu binden und so aus dem Gleichgewicht zu entfernen. Auf diese Weise wird schließlich der Gehalt an noch vorhandenem Monoorganosiloxan minimiert.
(d) Ein wesentlicher Vorteil des Verfahrens besteht nun zusätzlich darin, dass nach erfolgter Dosierung von Acetylchlorid und kurzer Nachreaktion(vorzugsweise 5 min - 1 h, bevorzugt 10 min bis 30 min), die Reaktionsmischung phasensepariert. Es kann eine saure Phase enthaltend Alkohol, wie MeOH, Wasser, Essigsäure, saurer Katalysator abgetrennt werden. Dies bietet zum einen den Vorteil, dass Alkohol, wie MeOH, und Wasser für mögliche spätere Nebenreaktionen abgetrennt werden, zum anderen, dass die Menge des für die Neutralisation zu verwendenden Hexamethyldisilazans minimiert wird.
(e) Um schließlich den noch verbliebenen Nebenproduktgehalt an Monohydroxysilan zu minimieren, werden pro Mol Alkoxysilan (4) 0,02-1,0 mol, vorzugsweise 0,1 - 0,8 mol, bevorzugt 0,2 - 0,6 mol, Hexamethyldisilazan (6) zugesetzt und anschließend nachgerührt. Die Dosierung und Nachreaktion erfolgt vorzugsweise innerhalb einer Gesamtdauer von 1 h - 5 h bei vorzugsweise 10°C - 40°C.
   Eine Neutralisation der Reaktionsmischung vor der Destillation ist essentiell, um während der späteren Destillation die Neubildung von Nebenprodukten insbesondere difunktionellem Disiloxan durch Verschiebung des Gleichgewichts unter sauren Bedingungen zu vermeiden. Durch den Verzicht auf die Verwendung wässriger Neutralisationsmittel bei Verwendung von Hexamethyldisilazan wird zudem eine nachträgliche Bildung von Monohydroxysilan als Nebenprodukt vermieden.
(f) Die entstandenen Salze werden abfiltriert, beispielsweise über eine Druckfilternutsche bzw. Zentrifuge und nachgeschalteter Feinfiltration, wobei vorzugsweise ein Sieb bzw. Filter mit einer Maschenweite von 0,2 - 2 µm, bevorzugt 0,2 - 0,5 µm verwendet wird. Um das Produkt während bzw. nach der Destillation zu stabilisieren, ist die Zugabe von Stabilisatoren im Verfahren vor oder nach dem Destillationschritt möglich.
   Im Vakuum werden die flüchtigen Bestandteile abgetrennt und nachfolgend das Produkt destilliert. Zur Destillation können neben herkömmlichen Destillationsverfahren ohne/bzw. mit Destillationskolonne auch thermisch schonende Verfahren wie Dünnschichtverdampfung, Kurzwegverdampfung und Vergleichbares eingesetzt werden.
   Im Zuge der Destillation erfolgt weiterhin eine zusätzliche Abtrennung von anorganischen Verunreinigungen, z. B. Salzen. Sowohl für die Verarbeitungseigenschaften als auch die Materialeigenschaften des polymerisierbaren Silicons essentiell ist neben einer hohen Reinheit auch der Ausschluss von polymeren Anteilen. Um die Bildung von Polymer in polymerisierbaren Siliconen während deren Synthese zu vermeiden, können Stabilisatoren während der Reaktion oder der Aufarbeitung zugesetzt werden. Aufgrund der inhibierenden Wirkung von Sauerstoff hinsichtlich einer potentiellen radikalischen Polymerisation von Acryl-, Methacryl-, Ethinyl- oder Vinylgruppen, ist es auch möglich, einzelne Verfahrensschritte unter einem Sauerstoffpartialdruck (z.B. Magerluft) durchzuführen. Durch Destillation des Produktes wird zusätzlich die Existenz polymerer Verunreinigungen im Produkt vermieden. Zur Stabilisierung des polymerisierbaren Silicons können für die Lagerung auch nach dessen Isolierung Stabilisatoren zugesetzt werden. Der Gehalt an zugesetztem Stabilisator sollte hierbei vorzugsweise zwischen 100 und 5000 ppm (bzgl. Alkoxysilan (4)), bevorzugt zwischen 200 und 2000 ppm liegen. Beispiele für Stabilisatoren sind 2,6-Di-tert.-butyl-4-methylphenol(BHT), 2,6-Di-tert.-butyl-4-(dimethylaminomethyl)-phenol, und Phenothiazin.
(g) Um eventuell noch vorhandene Salze, Metalle, Partikel abzutrennen, wird das destillierte polymerisierbare Silicon gegebenenfalls nochmals filtriert. Hierzu wird beispielsweise eine Filterkerze mit einer Porengröße von 0,1 - 1 µm, vorzugsweise 0,2-0,5 µm verwendet.

Die nach dem erfindungsgemäßen Verfahren hergestellten polymerisierbaren Silicone besitzen eine hohe Reinheit von mindestens 98,5% und einen niedrigen Gehalt von jeweils weniger als 0,4 % an den Nebenprodukten Monohydroxysilanen, Monoorganoxysilanen und difunktionellen Disiloxanen.

Weiterhin weisen die nach dem erfindungsgemäßen Verfahren hergestellten polymerisierbaren Silicone vorzugsweise Salzgehalte von weniger als 200 ppm, bevorzugt weniger als 150 ppm auf.

Die erfindungsgemäßen polymerisierbaren Silicone werden als Rohstoff bzw. Monomer für die Herstellung elektronischer Materialien, zur Herstellung von Kontaktlinsen und optischen Bauteilen, als Rohstoff in Zusammensetzungen für funktionale und industrielle Beschichtungen, für polymere Mikrostrukturen oder Kosmetikanwendungen verwendet.

### Beispiel 1: 3-Methacryloxypropyltris(trimethylsiloxy)silan

In einem Dreihalskolben werden 80,8 g (0,499 mol) Hexamethyldisiloxan, 39,9 g (0,67 mol) Essigsäure sowie 0,5 g einer 10%-igen Lösung von Trifluormethansulfonsäure in Essigsäure (0,0003 mol) vorgelegt und unter Rühren auf 45°C erwärmt. Anschließend wird innerhalb einer Stunde (bei 45°C) 55,0 g (0,22 mol) 3-Methacryloxypropyltrimethoxysilan (WACKER GENIOSIL® GF 31) dosiert und 1 h bei 45 °C nachgerührt.Das Rohprodukt wird mittels Gaschromatographie (GC) untersucht. Neben den leicht flüchtigen Bestandteilen der Reaktionsmischung finden sich folgende GC-Gehalte: Produkt (44,3 Fl.-%); Monoorganoxyverunreinigung CH₂=CH(CH₃)-COO-(CH₂)₃-Si(OSiMe₃)₂OMe (1,1 Fl.-%); Monohydroxyverunreinigung CH₂=CH(CH₃)-COO-(CH₂)₃-Si(OSiMe₃)₂OH (0,6 Fl.-%) sowie 0,5 Fl.-% des difunktionellen Disiloxans (Dimeren) [CH₂=CH(CH₃)-COO-(CH₂)₃-Si(OSiMe₃)₂]O.

Es werden der Reaktionsmischung bei 45°C 13,1 g (0,167 mol) an Acetylchlorid zugesetzt (innerhalb 10 min), bevor 10 min nachgerührt wird. Bei Raumtemperatur wird eine saure Phase von der organischen Schicht abgetrennt, bevor die Reaktionsmischung erneut gaschromatographisch untersucht wird. Es finden sich: Produkt (50,0 Fl.-%); Monoorganoxyverunreinigung CH₂=CH(CH₃-COO-(CH₂)₃-Si(OSiMe₃)₂OMe (0,1 Fl.-%); Monohydroxyverunreinigung CH₂=CH(CH₃)-COO-(CH₂)₃-Si(OSiMe₃)₂OH (0,5 Fl.-%) sowie 0,8 Fl.-% des difunktionellen Disiloxans (Dimeren) [CH₂=CH(CH₃)-COO-(CH₂)₃-Si(OSiMe₃)₂]O.

Um den verbliebenen Gehalt an Monohydroxysilanverunreinigung zu eliminieren / zu reduzieren werden 18 g (0,12 mol) an Hexamethyldisilazan zugegeben, wobei die Reaktionsmischung gleichzeitig neutralisiert wird. Nach Abfiltration des gebildeten Salzes wird die Reaktionsmischung erneut mittels GC untersucht. Es finden sich: Produkt (44,6 Fl.-%); Monoorganoxyverunreinigung CH₂=CH(CH₃)-COO-(CH₂)₃-si(OSiMe₃)₂OMe (0,1 Fl.-%); Monohydroxyverunreinigung CH₂=CH(CH₃)-COO-(CH₂)₃-Si(OSiMe₃)₂OH (0,0 Fl.-%) sowie 0,8 Fl.-% des difunktionellen Disiloxans (Dimeren) [CH₂=CH(CH₃)-COO-(CH₂)₃-Si(OSiMe₃)₂]O.

Nach Abdestillation der flüchtigen Bestandteile wird das Produkt im Vakuum destilliert und über eine Filterkerze abfiltriert. Das gewünschte Produkt wird in einer Ausbeute von 80 % erhalten und weist eine Reinheit von 99,6 Fl.-% auf (enthält 0,1 Fl.-% Monoorganoxysilan). Die genannten Monohydroxy- sowie Disiloxanverunreinigungen sind nicht mehr nachweisbar.

### Vergleichsversuch 1:

Das Verfahren wird analog Beispiel 1 durchgeführt mit dem Unterschied, dass nach Zugabe von Methacryloxypropyltrimethoxysilan (WACKER GENIOSIL® GF 31)und entsprechendem Nachrühren 17,0 g (0,167 mol) Acetanhydrid anstelle von Acetylchlorid zugegeben wird und dass anstelle einer Reaktion und Neutralisation mit Hexamethyldisilazan mit CaCO₃ neutralisiert wird.

Nach Zugabe von Methacryloxypropyltrimethoxysilan (WACKER GENIOSIL® GF 31)und entsprechendem Nachrühren wird zunächst das Rohprodukt mittels Gaschromatographie (GC) untersucht. Neben den leicht flüchtigen Bestandteilen der Reaktionsmischung finden sich folgende GC-Gehalte: Produkt (45,8 Fl.-%); Monoorganoxyverunreinigung CH₂=CH(CH₃)-COO-(CH₂)₃-Si(OSiMe₃)₂OMe (1, 2 Fl.-%); Monohydroxyverunreinigung (CH₂=CH(CH₃)-COO-(CH₂)₃-Si(OSiMe₃)₂OH (0,6 Fl.-%) sowie 0,5 Fl.-% des difunktionellen Disiloxans (Dimeren) [CH₂=CH(CH₃)-COO-(CH₂)₃-Si(OSiMe₃)₂]O.

Nach Zusatz des Acetanhydrids (17,0 g; 0,167 mol) kann jedoch anders als im erfindungsgemäßen Beispiel 1) keine saure Unterphase abgetrennt werden. Die Reaktionsmischung wird erneut gaschromatographisch untersucht. Es finden sich (neben den leicht flüchtigen Bestandteilen) Produkt (48,6 Fl.-%); Monoorganoxyverunreinigung CH₂=CH(CH₃)-COO-(CH₂)₃-Si(OSiMe₃)₂OMe (0,6 Fl.-%); Monohydroxyverunreinigung CH₂=CH(CH₃)-COO-(CH₂)₃-Si(OSiMe₃)₂OH (0,4 Fl.-%) sowie 0,8 Fl.-% des difunktionellen Disiloxans (Dimeren) [CH₂=CH(CH₃)-COO-(CH₂)₃-Si(OSiMe₃)₂]O.

Die Reaktion wird durch Zugabe von 60 g CaCO₃ gestoppt bzw. neutralisiert, wobei aufgrund des Feststoffeintrags die Viskosität der Reaktionsmischung deutlich ansteigt.
Bei der gaschromatographischen Untersuchung finden sich neben den leicht flüchtigen Bestandteilen: Produkt (46,2 Fl.-%); Monoorganoxyverunreinigung CH₂=CH(CH₃)-COO-(CH₂)₃-Si(OSiMe₃)₂OMe (0, 7 Fl.-%); Monohydroxyverunreinigung CH₂=CH(CH₃)-COO-(CH₂)₃-Si(OSiMe₃)₂OH (0,5 Fl.-%) sowie 0,8 Fl.-% des difunktionellen Disiloxans (Dimeren) [CH₂=CH(CH₃)-COO-(CH₂)₃-Si(OSiMe₃)₂]O.

Nach Abfiltration der Salze und Abdestillation der flüchtigen Bestandteile wird die Reaktionsmischung mittels GC untersucht. Es finden sich: Produkt 96,4 Fl.-%; Monoorganoxyverunreinigung CH₂=CH(CH₃)-COO-(CH₂)₃-Si(OSiMe₃)₂OMe (1,2 Fl.-%); Monohydroxyverunreinigung CH₂=CH(CH₃)-COO-(CH₂)₃-Si(OSiMe₃)₂OH (0,8 Fl.-%) sowie 1,2 Fl.-% des difunktionellen Disiloxans (Dimeren) [CH₂=CH(CH₃)-COO-(CH₂)₃-Si(OSiMe₃)₂]O.

Nach Vakuumdestillation und Feinfiltration wird das Produkt in einer Ausbeute von 62% erhalten, es weist folgende Reinheiten auf: Produkt (97,4 Fl.-%); Monoorganoxyverunreinigung CH₂=CH(CH₃)-COO-(CH₂)₃-Si(OSiMe₃)₂OMe (1,1 Kl.-%); Monohydroxyverunreinigung (CH₂=CH(CH₃)-COO-(CH₂)₃-Si(OSiMe₃)₂OH (0,9 Fl.-%) sowie 0,0 Fl.-% des difunktionellen Disiloxans (Dimeren) [CH₂=CH(CH₃)-COO-(CH₂)3-Si(OSiMe₃)₂]O.

### Vergleichsversuch 2:

Das Verfahren wird analog Beispiel 1 durchgeführt mit dem Unterschied, dass anstelle einer Reaktion und Neutralisation mit Hexamethyldisilazan mit CaCO₃ neutralisiert wird.

Nach Zugabe von Methacryloxypropyltrimethoxysilan (WACKER GENIOSIL® GF 31)und entsprechendem Nachrühren wird zunächst das Rohprodukt mittels Gaschromatographie (GC) untersucht. Neben den leicht flüchtigen Bestandteilen der Reaktionsmischung finden sich folgende GC-Gehalte: Produkt (46,3 Fl.-%); Monoorganoxyverunreinigung CH₂=CH(CH₃)-COO-(CH₂)₃-Si(OSiMe₃)₂OMe (1,3 Fl.-%); Monohydroxyverunreinigung CH₂=CH(CH₃)-COO-(CH₂)₃-Si(OSiMe₃)₂OH (0,7 Fl.-%) sowie 0,4 Fl.-% des difunktionellen Disiloxans (Dimeren) [CH₂=CH(CH₃)-COO-(CH₂)₃-Si(OSiMe₃)₂]O.

Nach entsprechender Zugabe von 13,1 g (0,167 mol) an Acetylchlorid und Nachrühren (10 min) wird die entstandene saure Unterphase abgetrennt und das Reaktionsgemisch gaschromatographisch untersucht: Produkt (47,3 Fl.-%); Monoorganoxyverunreinigung CH₂=CH(CH₃)-COO-(CH₂)₃-Si(OSiMe₃)₂OMe (0,1 Fl.-%); Monohydroxyverunreinigung CH₂=CH(CH₃)-COO-(CH₂)₃-Si(OSiMe₃)₂OH (0,5 Fl.-%) sowie 0,9 Fl.-% des difunktionellen Disiloxans (Dimeren) [CH₂=CH(CH₃)-COO-(CH₂)₃-Si(OSiMe₃)₂]O.

Die Reaktion wird durch Zugabe von 10 g CaCO₃ gestoppt bzw. neutralisiert.
Bei der gaschromatographischen Untersuchung finden sich neben den leicht flüchtigen Bestandteilen: Produkt (47,7 Fl.-%); Monoorganoxyverunreinigung CH₂=CH(CH₃)-COO-(CH₂)₃-Si(OSiMe₃)₂OMe (0,1 Fl.-%); Monohydroxyverunreinigung CH₂=CH(CH₃)-COO-(CH₂)₃-Si(OSiMe₃)₂OH (0,6 Fl.-%) sowie 0,7 Fl.-% des difunktionellen Disiloxans (Dimeren) [CH₂=CH(CH₃)-COO-(CH₂)₃-Si(OSiMe₃)₂]O.

Nach Abtrennung der Salze und Abdestillation der leicht-flüchtigen Bestandteile wird das Rohprodukt in der folgenden Reinheit erhalten: Produkt (97,2 Fl.-%); Monoorganoxyverunreinigung CH₂=CH(CH₃)-COO-(CH₂)₃-Si(OSiMe₃)₂OMe (0, 2 Fl.-%); Monohydroxyverunreinigung CH₂=CH(CH₃)-COO-(CH₂)₃-Si(OSiMe₃)₂OH (0,9 Fl.-%) sowie 1,3 Fl.-% des difunktionellen Disiloxans (Dimeren) [CH₂=CH(CH₃)-COO-(CH₂)₃-Si(OSiMe₃)₂]O.

Nach Destillation im Vakuum und Feinfiltration wird das Produkt mit einer Ausbeute von 60 % erhalten. Es weist folgende Reinheit (GC-Fl.-%) auf: Produkt (98,1 Fl.-%);
Monoorganoxyverunreinigung CH₂=CH(CH₃)-COO-(CH₂)₃-Si(OSiMe₃)₂OMe (0, 2 Fl.-%); Monohydroxyverunreinigung CH₂=CH(CH₃)-COO-(CH₂)₃-Si (OSiMe₃)₂OH (1, 1 Fl.-%).

**Tabelle:**

| | Beispiel 1 | Vergleich 1 | Vergleich 2 |
|---|---|---|---|
| nach Reaktion | | | |
| Gehalt Monoorganoxy | 1,1 % | 1,2 % | 1,3 % |
| Gehalt Monohydroxy | 0,6 % | 0,6 % | 0,7 % |
| Gehalt Disiloxan | 0,5 % | 0,5 % | 0,4 % |
| Gehalt Produkt | 44,3 % | 45,8 % | 46,3 % |
| Nachreaktion mit | Acetylchlorid | Acetanhydrid | Acetylchlorid |
| Molverhältnis | 0,75 | 0,75 | 0,75 |
| [AcCl/Alkoxysilanel bzw. | | | |
| [Ac20 /Alkoxysilan] | | | |
| Abtrennung Sauerphase | + | nicht möglich | + |
| Gehalt Monoorganoxy | 0,1 % | 0,6 % | 0,1 % |
| Gehalt Monohydroxy | 0,5 % | 0,4 % | 0,5 % |
| Gehalt Disiloxan | 0,8 % | 0,8 % | 0,9 % |
| Gehalt Produkt | 50,0 % | 48,6 % | 47,3 % |
| Neutralisation | HMN | CaCO₃ | CaCO₃ |
| Molverhältnis | 0,5 | 2,7 | 0,45 |
| [HMN/Alkoxysilan] bzw. | | | |
| [CaCO₃/Alkoxysilan] | | | |
| Gehalt Monoorganoxy | 0,1 % | 0,7 % | 0,1 % |
| Gehalt Monohydroxy | 0,0 % | 0,5 % | 0,6 % |
| Gehalt Disiloxan | 0,8 % | 0,8 % | 0,7 % |
| Gehalt Produkt | 44,6 % | 46,2 % | 47,7 % |
| Produkt nach Abdestillation der Leichtsieder | | | |
| Gehalt Monoorganoxy | 0,1 % | 1,2 % | 0,2 % |
| Gehalt Monohydroxy | 0,0 % | 0,8 % | 0,9 % |
| Gehalt Disiloxan | 1,3 % | 1,2 % | 1,3 % |
| Gehalt Produkt | 98,4 % | 96,4 % | 97,2 % |
| Endprodukt nach Destillation und Filtration | | | |
| Gehalt Monoorganoxy | 0,1 % | 1,1 % | 0,2 % |
| Gehalt Monohydroxy | 0,0 % | 0,9 % | 1,1 % |
| Gehalt Disiloxan | 0,0 % | 0,0 % | 0,0 % |
| Gehalt Produkt | 99,6 % | 97,4 % | 98,1 % |
| Ausbeute | 80 % | 62 % | 60 % |

### Beispiel 2: 1-Methacryloxymethyltris(trimethylsiloxy)silan

In einem Dreihalskolben werden 80,8 g (0,499 mol) Hexamethyldisiloxan, 39,9 g (0,67 mol) Essigsäure sowie 0,5 g einer 10%-igen Lösung von Trifluormethansulfonsäure in Essigsäure (0,0003 mol) vorgelegt und unter Rühren auf 45°C erwärmt. Anschließend wird innerhalb einer Stunde (bei 45°C) 48,8 g (0,22 mol) 1-Methacryloxymethyltrimethoxysilan (WACKER GENIOSIL® XL 33) dosiert und 1 h bei 45 °C nachgerührt. Das Rohprodukt wird mittels Gaschromatographie (GC) untersucht. Neben den leicht flüchtigen Bestandteilen der Reaktionsmischung finden sich folgende GC-Gehalte: Produkt (44,7 Fl.-%); Monoorganoxyverunreinigung (CH₂=CH(CH₃)-COO-CH₂-Si(OSiMe₃)₂OMe, 1,1 Fl.-%); Monohydroxyverunreinigung (CH₂=CH(CH₃)-COO-CH₂-Si(OSiMe₃)₂OH, 0,7 Fl.-%) sowie 0,6 Fl.-% des difunktionellen Disiloxans (Dimeren) [CH₂=CH(CH₃)-COO-(CH₂)₃-Si(OSiMe₃)₂]O. Es werden der Reaktionsmischung bei 40°C 6,1 g (0,078 mol) an Acetylchlorid zugesetzt und anschließend wird 20 min nachgerührt. Bei Raumtemperatur wird eine saure Unterphase von der organischen Schicht abgetrennt, bevor die Reaktionsmischung erneut gaschromatographisch untersucht wird. Es finden sich: Produkt (49,3 Fl.-%); Monoorganoxyverunreinigung (CH₂=CH(CH₃)-COO-CH₂-Si(OSiMe₃)₂OMe, 0,2 Fl.-%); Monohydroxyverunreinigung (CH₂=CH(CH₃)-COO-CH₂-Si(OSiMe₃)₂OH, 0,7 Fl.-%) sowie 0,9 Fl.-% des difunktionellen Disiloxans (Dimeren) [CH₂=CH(CH₃)-COO-CH₂-Si(OSiMe₃)₂]O.
Um den verbliebenen Gehalt an Monohydroxysilanverunreinigung zu eliminieren / zu reduzieren werden 17,9 g (0,11 mol) an Hexamethyldisilazan zugegeben, wobei die Reaktionsmischung gleichzeitig neutralisiert wird. Nach Abfiltration des gebildeten Salzes wird die Reaktionsmischung erneut mittels GC untersucht. Es finden sich (neben leicht flüchtigen Bestandteilen): Produkt 48,7 Fl.-%; Monoorganoxyverunreinigung (CH₂=CH(CH₃)-COO-CH₂-Si(OSiMe₃)₂OMe, 0,2 Fl.-%); Monohydroxyverunreinigung (CH₂=CH(CH₃)-COO-CH₂-Si(OSiMe₃)₂OH, 0,0 Fl.-%) sowie 0,9 Fl.-% des difunktionellen Disiloxans (Dimeren) [CH₂=CH(CH₃)-COO-CH₂-Si(OSiMe₃)₂]O. Nach Abdestillation der flüchtigen Bestandteile wird das Produkt im Vakuum destilliert und über eine Filterkerze (Porenweite 0,2 µm) abfiltriert. Das gewünschte Produkt wird in einer Ausbeute von 78 % erhalten und weist eine Reinheit von 99,3 Fl.-% auf (enthält noch 0,2 Fl.-% Monoorganoxysilan). Die Monohydroxyverunreinigung ist nicht mehr nachweisbar).

### Beispiel 3: 1-Methacryloxymethylbis(trimethylsiloxy)methylsilan

Das Vorgehen ist analog Beispiel 2. Statt 48,8 g (0,22 mol) 1-Methacryloxymethyltrimethoxysilan (WACKER GENIOSIL® XL 33) werden im vorliegenden Beispiel 44,9 g (0,22 mol) an 1-Methacryloxymethyldimethoxymethylsilan (WACKER GENIOSIL® XL 32) sowie lediglich 56,7 g (0,35 mol) Hexamethyldisiloxan eingesetzt. Das gewünschte Produkt wird in einer Ausbeute von 81% erhalten. GC-Reinheit: 99,4% 1-Methacryloxymethyl-bis(trimethylsiloxy)methylsilan (0,1 Fl.-% Monoorganoxysilan). Die Monohydroxyverunreinigung ist nicht mehr nachweisbar).

### Beispiel 4: Vinyltris(trimethylsiloxy)silan

Das Vorgehen ist analog Beispiel 2. Statt 48,8 g (0,22 mol) 1-Methacryloxymethyltrimethoxysilan (WACKER GENIOSIL® XL 33) werden im vorliegenden Beispiel 32,6 g (0,22 mol) an Vinyltrimethoxysilan eingesetzt. Das gewünschte Produkt wird in einer Ausbeute von 79% erhalten. GC-Reinheit: 99,6% Vinyltris(trimethylsiloxy)silan (0,2 Fl.-% Monoorganoxysilan). Die Monohydroxyverunreinigung ist nicht mehr nachweisbar).

## Patentansprüche

1. Verfahren zur Herstellung hochreiner polymerisierbarer Silicone der Formel
P-Y-Sp-Si(R²)ₙ(OSiR¹₃)₍₃₋ₙ₎ (I)
indem
(a) Disiloxan (1) der Formel
(R¹)₃SiOSi(R¹)₃ (II)
in Gegenwart von Essigsäure (2) und saurem Katalysator (3) vorgelegt wird,
(b) bei einer Temperatur von 0° bis 60°C ein substituiertes Alkoxysilan (4) der Formel
P-Y-Sp-Si(R²)ₙ(OR³)₍₃₋ₙ₎ (III)
zudosiert wird,
(c) 0,2 - 1,0 mol Acetylchlorid (5), bezogen auf 1 Mol Alkoxysilan (4), zugesetzt wird,
(d) nach Phasenseparation eine saure Phase (Unterschicht) abgetrennt wird,
(e) 0,02 - 1,0 mol Hexamethyldisilazan (6), bezogen auf 1 Mol Alkoxysilan (4), zugesetzt wird,
(f) nach Abfiltration des entstandenen Salzes die leicht-flüchtigen Bestandteile entfernt werden und das Produkt destilliert wird,
und gegebenenfalls
(g) das Produkt anschließend filtriert wird,
wobei
R¹ gleich oder verschieden ist und ein Wasserstoffatom oder einen gegebenenfalls substituierten einwertigen Kohlenwasserstoffrest mit 1 bis 18 Kohlenstoffatomen bedeutet,
R² gleich oder verschieden ist und ein Wasserstoffatom oder einen gegebenenfalls substituierten einwertigen Kohlenwasserstoffrest mit 1 bis 18 Kohlenstoffatomen bedeutet,
R³ gleich oder verschieden ist und einen gegebenenfalls mit Alkoxygruppen substituierten Alkylrest mit 1 bis 18 Kohlenstoffatomen bedeutet,
Sp eine Einfachbindung oder einen zweiwertigen Kohlenwasserstoffrest mit 1 bis 8 Kohlenstoffatomen bedeutet,
Y eine Einfachbindung oder -O- bedeutet,
P einen Acryloxy-, Methacryloxy-, Vinyl- oder Allylrest bedeutet
n 0, 1 oder 2, vorzugsweise 0, ist.

2. Verfahren nach Anspruch 1, **dadurch gekennzeichnet, dass** das Molmengenverhältnis von Disiloxan (1) und Alkoxysilan (4) 0,5 bis 1,0 mol, bevorzugt 0,6 bis 0,8 mol, Disiloxan (1) je Mol Alkoxygruppe des Alkoxysilans(4) beträgt.

3. Verfahren nach Anspruch 1 oder 2, **dadurch gekennzeichnet, dass** im Verfahrensschritt (b) das Alkoxysilan (4) innerhalb von 0,5 h - 3 h zudosiert wird und anschließend bei 0 - 60°C nachreagiert wird.

4. Verfahren nach Anspruch 1, 2 oder 3, **dadurch gekennzeichnet, dass** als Alkoxysilan (4) 3-Methacryloxypropyltrimethoxysilan eingesetzt wird.

5. Verfahren nach einem der Ansprüche 1 bis 4, **dadurch gekennzeichnet, dass** als Disiloxan (1) Hexamethyldisiloxan eingesetzt wird.

6. Verfahren nach einem der Ansprüche 1 bis 5, **dadurch gekennzeichnet, dass** ein Stabilisator vor oder nach der Destillation eingesetzt wird.

7. Verfahren nach einem der Ansprüche 1 bis 6, **dadurch gekennzeichnet, dass** ein oder mehrere Verfahrensschritte unter Sauerstoffpartialdruck durchgeführt werden.

## Claims

1. Method for the production of high-purity polymerizable silicones of the formula
P-Y-Sp-Si(R²)ₙ(OSiR¹₃)₍₃₋ₙ₎ (I)
by
(a) initially introducing disiloxane (1) of the formula
(R¹)₃SiOSi(R¹)₃ (II)
in the presence of acetic acid (2) and acidic catalyst (3),
(b) at a temperature of from 0° to 60°C, metering in a substituted alkoxysilane (4) of the formula
P-Y-Sp-Si(R²)ₙ(OR³)₍₃₋ₙ₎ (III),
(c) adding 0.2-1.0 mol of acetyl chloride (5), based on 1 mol of alkoxysilane (4),
(d) following phase separation, separating off an acid phase (lower layer),
(e) adding 0.02 - 1.0 mol of hexamethyldisilazane (6), based on 1 mol of alkoxysilane (4),
(f) after filtering off the resulting salt removing the readily volatile constituents and distilling the product, and optionally
(g) then filtering the product,
where
R¹ is identical or different and is a hydrogen atom or an optionally substituted monovalent hydrocarbon radical having 1 to 18 carbon atoms,
R² is identical or different and is a hydrogen atom or an optionally substituted monovalent hydrocarbon radical having 1 to 18 carbon atoms,
R³ is identical or different and is an alkyl radical having 1 to 18 carbon atoms which is optionally substituted with alkoxy groups, Sp is a single bond or a divalent hydrocarbon radical having 1 to 8 carbon atoms,
Y is a single bond or -O-,
P is an acryloxy, methacryloxy, vinyl or allyl radical,
n is 0, 1 or 2, preferably 0.

2. Method according to Claim 1, **characterized in that** the quantitative molar ratio of disiloxane (1) and alkoxysilane (4) is 0.5 to 1.0 mol, preferably 0.6 to 0.8 mol, of disiloxane (1) per mole of alkoxy group of the alkoxysilane (4).

3. Method according to Claim 1 or 2, **characterized in that**, in process step (b), the alkoxysilane (4) is metered in over the course of 0.5 h - 3 h and the mixture is then post-reacted at 0°C - 60°C.

4. Method according to Claim 1, 2 or 3, **characterized in that** the alkoxysilane (4) used is 3-methacryloxypropyltrimethoxysilane.

5. Method according to any one of Claims 1 to 4, **characterized in that** the disiloxane (1) used is hexamethyldisiloxane.

6. Method according to any one of Claims 1 to 5, **characterized in that** a stabilizer is used before or after the distillation.

7. Method according to any one of Claims 1 to 6, **characterized in that** one or more process steps are carried out under oxygen partial pressure.

## Revendications

1. Procédé pour la préparation de silicones polymérisables très purs, de formule
P-Y-Sp-Si(R²)ₙ(OSiR¹₃)₍₃₋ₙ₎ (I)
par
(a) disposition au préalable d'un disiloxane (1) de formule
(R¹)₃SiOSi(R¹)₃ (II)
en présence d'acide acétique (2) et d'un catalyseur acide (3),
(b) addition dosée, à une température de 0° à 60 °C, d'un alcoxysilane substitué (4) de formule
P-Y-Sp-Si(R²)ₙ(OR³)₍₃₋ₙ₎ (III),
(c) addition de 0,2 - 1,0 mole de chlorure d'acétyle (5), par rapport à 1 mole d'alcoxysilane (4),
(d) après séparation des phases, élimination d'une phase acide (couche inférieure),
(e) addition de 0,02 - 1,0 mole d'hexaméthyldisilazane (6), par rapport à 1 mole d'alcoxysilane (4),
(f) après séparation par filtration du sel formé élimination des composants aisément volatils et distillation du produit
et éventuellement
(g) ensuite filtration du produit,
R¹ étant le même ou différent et représentant un atome d'hydrogène ou un radical hydrocarboné monovalent éventuellement substitué ayant de 1 à 18 atomes de carbone,
R² étant le même ou différent et représentant un atome d'hydrogène ou un radical hydrocarboné monovalent éventuellement substitué ayant de 1 à 18 atomes de carbone,
R³ étant le même ou différent et représentant un radical alkyle ayant de 1 à 18 atomes de carbone, éventuellement substitué par des groupes alcoxy,
Sp représentant une simple liaison ou un radical hydrocarboné divalent ayant de 1 à 8 atomes de carbone, Y représentant une simple liaison ou -O-,
F représentant un radical acryloxy, méthacryloxy, vinyle ou allyle
n étant 0, 1 ou 2, de préférence 0.

2. Procédé selon la revendication 1, **caractérisé en ce que** le rapport des quantités molaires du disiloxane (1) et de l'alcoxysilane (4) vaut de 0,5 à 1,0 mole, de préférence de 0,6 à 0,8 mole, de disiloxane (1) par mole de groupe alcoxy de l'alcoxysilane (4).

3. Procédé selon la revendication 1 ou 2, **caractérisé en ce que** dans l'étape (b) du procédé l'alcoxysilane (4) est ajouté par addition dosée en l'espace de 0,5 h - 3 h et ensuite post-réagit à 0 - 60 °C.

4. Procédé selon la revendication 1, 2 ou 3, **caractérisé en ce qu'**on utilise comme alcoxysilane (4) du 3-méthacryloxypropyltriméthoxysilane.

5. Procédé selon l'une quelconque des revendications 1 à 4, **caractérisé en ce qu'**on utilise comme disiloxane (1) de l'hexaméthyldisiloxane.

6. Procédé selon l'une quelconque des revendications 1 à 5, **caractérisé en ce qu'**on utilise un stabilisant avant ou après la distillation.

7. Procédé selon l'une quelconque des revendications 1 à 6, **caractérisé en ce qu'**une ou plusieurs étapes du procédé sont effectuées sous une pression partielle d'oxygène.
